# EUROPEAN PATENT SPECIFICATION

(11) **EP 2 870 331 B1**
(45) Date of publication and mention of the grant of the patent: **06.09.2017**
(21) Application number: 13819990.6
(22) Date of filing: 04.07.2013
(51) Int. Cl.: F01N 3/035, F01N 3/20, F01N 9/00

(54) **METHOD PERTAINING TO AN SCR SYSTEM AND AN SCR SYSTEM.**
VERFAHREN FÜR EIN SCR-SYSTEM UND SCR-SYSTEM
PROCÉDÉ SE RAPPORTANT À UN SYSTÈME DE RCS ET SYSTÈME DE RCS

(30) Priority: 05.07.2012 SE 1250768
(43) Date of publication of application: 13.05.2015
(73) Proprietor: Scania CV AB, 151 87 Södertälje (SE)
(72) Inventor: SARBY, Håkan, S-141 42 Huddinge (SE)
(74) Representative: Scania CV AB
(86) International application number: PCT/SE2013/050872
(87) International publication number: WO 2014/014399

(56) References cited:
- EP-A1- 2 216 520
- EP-A1- 2 216 520
- WO-A1-2013/095214
- WO-A2-2011/060111
- WO-A2-2011/060111
- DE-A1- 10 300 298
- FR-A1- 2 956 039
- FR-A1- 2 956 039
- US-A1- 2009 193 794

## Description

### TECHNICAL FIELD

The present invention relates to a method pertaining to an SCR system. The invention relates also to a computer programme product comprising programme code for a computer for implementing a method according to the invention. It relates also to an SCR system and a motor vehicle equipped with the SCR system.

### BACKGROUND

Vehicles today use, for example, urea as reducing agent in SCR (selective catalytic reduction) systems which comprise an SCR catalyst in which said reducing agent and NOₓ gas can react and be converted to nitrogen gas and water. Various types of reducing agents may be used in SCR systems. AdBlue is an example of a commonly used reducing agent.

One type of SCR system comprises a container which holds a reducing agent. The system has also a pump adapted to drawing said reducing agent from the container via a suction hose and supplying it via a pressure hose to a dosing unit situated adjacent to an exhaust system of the vehicle, e.g. adjacent to an exhaust pipe of the exhaust system. The dosing unit is adapted to injecting a necessary amount of reducing agent into the exhaust pipe upstream of of the SCR catalyst according to operating routines which are stored in a control unit of the vehicle. To make it easier to regulate the pressure when there are small or no dosing amounts, the system comprises also a return hose which runs back to the container from a pressure side of the system.

Today there is provided SCR systems which have a with SCR function coated filter, also denoted SCRF, for purifying emissions from a combustion engine. This filter allows to start dosing of reducing agent and conversion of NOₓ at an early stage, i.e. shortly after start up of said combustion engine. A disadvantage using such SCRF is that NO₂ is reduced in a relatively high degree. NO₂ is needed in the SCRF system to allow clean burning of soot in said filter, so called passive regeneration. A filter coated with an SCR function hereby presents heavily impaired passive regeneration compared to a conventional particulate filter.

In order to achieve regeneration of an SCRF so called active regeneration is necessary. This is however not desired by several reasons. One reason is that expensive components comprising precious metal are necessary to achieve desired function of said regeneration. In some cases an external injector for hydrocarbon based reducing agents will be necessary to accomplish an active regeneration of desired quality.

WO2011060111 describes a system and method for exhaust gas treatment. The system comprises a for SCR function coated particulate filter.

WO 2010/075345 describes a system and method for exhaust gas treatment. The system comprises a with SCR function coated particulate filter.

DE10300298 discloses a method pertaining for an SCR system. A reducing agent is provided to an exhaust stream from an engine for purifying the exhaust. The time for regeneration of a particle filter depends on the nitrogen oxide content of the exhaust gas.

### SUMMARY OF THE INVENTION

An object of the present invention is to propose a novel and advantageous method pertaining to an SCR system.

Another object of the invention is to propose a novel and advantageous SCR system and a novel and advantageous computer programme pertaining to an SCR system which provides increased performance during cold start of a vehicle.

Yet another object of the invention is to propose a method pertaining to an SCR system, an SCR system and a computer programme pertaining to an SCR system wherein active regeneration of a with SCR function coded filter may be avoided.

Yet another object of the invention is to propose an alternative method, an alternative device and an alternative computer programme pertaining to an SCR system.

Some of these objects are achieved with a method pertaining to an SCR system according to claim 1. Other objects are achieved with a device according to claim 7. Advantageous embodiments are depicted in the dependent claims.

According to an aspect of the invention there is provided a method pertaining to an SCR system wherein a reducing agent is provided to an exhaust gas stream from an engine for purifying said exhaust gas with respect to a content of NOₓ, wherein said SCR system comprises an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter, comprising the steps of:
- continuously determining a differential pressure over said filter;
- where applicable, controlling dosing of said first and said second dosing unit on the basis of the thus determined differential pressure over said filter, wherein
- at a predetermined high differential pressure corresponding to a high particulate accumulation in said filter, controlling the dosing of said dosing units to a lesser dosing of said first dosing unit
- at a determined low differential pressure corresponding to a low particulate accumulation in said filter, controlling the dosing of said dosing units to a higher dosing of said first dosing unit. According to an aspect of the invention a total need of reducing agent for an optimal reaction between dosed reducing agent and NOₓ gas of said exhaust gas is determined continuously. This total need may according to an embodiment be determined on the basis of a determined content of NOₓ in said exhaust gas from said engine. Said determined content of NOₓ can according to an embodiment be detected by means of a suitable sensor. According to an alternative embodiment said total need may be determined on the basis of a calculated content of NOₓ in said exhaust gas, wherein said calculation may be based on different parameters such as for example to said engine injected amount of fuel. Said determined total need of reducing agent is according to the inventive method dosed by means of the first dosing unit, the second dosing unit or both said first dosing unit and said second dosing unit.

By providing two dosing units for injecting reducing agent, dosing of reducing agent upstream of said filter may be adapted to a soot load in said filter. Said differential pressure over said filter is contental to a prevailing soot load. The SCR system may be arranged to dose a lesser amount reducing agent by means of said first dosing unit when said differential pressure is relatively high. Hereby there is advantageously achieved a method wherein a sufficient amount of NO₂ will be provided for passive regeneration of soot stored in said filter. The SCR system may according to this aspect dose a larger amount reducing agent so as to achieve a desired NOₓ conversion in the SCR catalyst downstream of said filter.

At normal soot load in said filter both said first dosing unit and said second dosing unit may be used to achieve maximal NOₓ conversion and a minimum ammonium slip.

According to an aspect of the invention passive regeneration of said with SCR function coded filter may be achieved. Advantageously a need of an external dosing unit for provision of a hydrocarbon based reducing agent is reduced.

Advantageously a risk for developing crystals of dosed reducing agent is reduced, because the two provided dosing units can cooperate regarding a total amount dosed reducing agent.

Preferably a less bulky SCR catalyst may be provided since said with SCR function coated filter partly is arranged to function as an SCR catalyst, which may contribute to that a smaller container to hold said reducing agent is required.

The method may further comprise the step of:
- determining a content of NOₓ in the exhaust gas as basis for a total need of reducing agent dosing. Hereby a total need of reducing agent dosing may be determined in a robust and reliable way.

The method comprises the step of:
- at a determined high differential pressure corresponding to a high particulate accumulation in said filter, controlling the dosing of said dosing units to a lesser dosing of said first dosing unit. A total amount of dosing agent which should be dosed is hereby determined. This total amount should according to this embodiment be dosed from both said first dosing unit and said second dosing unit. By controlling said dosing of said dosing units to a lesser dosing of said first dosing unit, a lesser portion of said total amount reducing agent is dosed by said first dosing unit according to this embodiment. Hereby passive regeneration of said filter may be achieved in a simple and robust way. Hereby obstruction of said filter may be avoided in an efficient way.

The method comprises the step of:
- at a determined low differential pressure corresponding to a low particulate accumulation in said filter, controlling the dosing of said dosing units to a higher dosing of said first dosing unit. A total amount of dosing agent which should be dosed is hereby determined. This total amount should according to this embodiment be dosed from both said first dosing unit and said second dosing unit. By controlling said dosing of said dosing units to a higher dosing of said first dosing unit, a larger portion of said total amount reducing agent is dosed by said first dosing unit according to this embodiment. Hereby a high conversion rate of NOₓ in an exhaust gas stream from an engine may be achieved.

Said controlling based on determined differential pressure may be activated when both said filter and said SCR catalyst have reached their respective operational temperature. By operation temperature it is hereby meant a temperature where said SCR catalyst may operate in a desired way. Said operation temperature may be within a temperature interval wherein the SCR catalyst has a normal working range.

At cold start, the dosing of reducing agent may be performed only by means of said first dosing unit independently of said differential pressure. At cold start, the dosing of reducing agent may be performed only by means of said first dosing unit based on a determined flow of NOₓ in said exhaust gas. Hereby efficient exhaust gas treatment may be initiated at an early stage, without the need of waiting for the SCR catalyst reaches its operation temperature. Hereby an environmental friendly method pertaining to an SCR system is achieved.

The method is easy to implement in existing motor vehicles. Programme code pertaining to an SCR system according to the invention may be installed in a control unit of the vehicle during the manufacture of the vehicle. A purchaser of the vehicle may thus have the possibility of selecting the function of the method as an option. Alternatively, programme code for conducting the innovative method pertaining to an SCR system may be installed in a control unit of the vehicle on the occasion of upgrading at a service station, in which case the programme code may be loaded into a memory in the control unit. Implementing the innovative method is therefore cost-effective. The invention thus represents a cost-effective solution to the problems indicated above.

Programme code which comprises programme code pertaining to an SCR system may be updated or replaced. Moreover, different parts of the programme code pertaining to an SCR system may be replaced independently of one another. This modular configuration is advantageous from a maintenance perspective.

According to an aspect of the present invention there is provided a method pertaining to an SCR system wherein a reducing agent is provided to an exhaust gas stream from an engine for purifying said exhaust gas with respect to a content of NOₓ, wherein said SCR system comprises an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter;
- continuously determining a differential pressure over said filter;
- continuously determining a total need of reducing agent dosing;
- where applicable, controlling dosing of said first and said second dosing unit on the basis of the thus determined differential pressure over said filter;
- on the basis of said total need of reducing agent dosing, at a determined high differential pressure corresponding to a high accumulation of particles in said filter, controlling said dosing of said dosing units to a lesser dosing of said first dosing unit;
- on the basis of said total need of reducing agent dosing, at a determined low differential pressure corresponding to a low accumulation of particles in said filter, controlling said dosing of said dosing units to a higher dosing of said first dosing unit.

According to an aspect of the invention there is provided an SCR system wherein a reducing agent is provided to an exhaust gas stream from an engine for purifying said exhaust gas with respect to a content of NOₓ, wherein said SCR system comprises an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter. The SCR system comprises:
- means for continuously determining a differential pressure over said filter;
- means for, when applicable, controlling said dosing of said first dosing unit and said second dosing unit on the basis of the thus determined differential pressure over said filter,
- means for, at a determined high differential pressure corresponding to a high particulate accumulation in said filter, controlling said dosing of said dosing units to a lesser dosing of said first dosing unit,
- means for, at a determined low differential pressure corresponding to a low particulate accumulation in said filter, controlling dosing of said dosing units to a higher dosing of said first dosing unit. The SCR system may further comprise:
   - means for determining an exhaust gas flow and content of NOₓ in said exhaust gas as basis for a total need of reducing agent dosing.

The SCR system comprises:
- means for, at a determined high differential pressure corresponding to a high particulate accumulation in said filter, controlling said dosing of said dosing units to a lesser dosing of said first dosing unit. When a determined differential pressure is exceeding a predetermined threshold value a high differential pressure is deemed to prevail. Said predetermined threshold value is a suitable threshold value.

The SCR system comprises:
- means for, at a determined low differential pressure corresponding to a low particulate accumulation in said filter, controlling dosing of said dosing units to a higher dosing of said first dosing unit. When a determined differential pressure is below a predetermined threshold value a low differential pressure is deemed to prevail. Said predetermined threshold value is a suitable threshold value.

The SCR system may comprise:
- means for determining a prevailing temperature of said filter;
- means for determining a prevailing temperature of said SCR catalyst; and
- means for activating said controlling based on an established differential pressure when both said filter and said SCR catalyst have reached their respective operational temperature. Said operation temperatures are predetermined suitable values.

At cold start of the SCR system, dosing of reducing agent may only be performed by means of said first dosing unit independently of said differential pressure. At cold start of the SCR system, dosing of reducing agent may only be performed by means of said first dosing unit based on a determined flow of NOₓ in said exhaust gas and/or based on a determined content of NOₓ in said exhaust gas.

According to an aspect of the invention there is provided a motor vehicle comprising the SCR-system. The motor vehicle is any from among truck, bus or passenger car.

According to an aspect of the invention there is provided a computer programme pertaining to an SCR system wherein a reducing agent is provided to an exhaust gas stream from an engine for purifying said exhaust gas with respect to a content of NOₓ comprising an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter, wherein said computer programme comprises a programme code stored on a computer readable medium for causing an electronic control unit or another computer connected to the electronic control unit to perform the steps according to any one of claims 1-6.

According to an aspect of the invention there is provided a computer programme pertaining to an SCR system, wherein said computer programme comprises a programme code stored on a computer readable medium for causing an electronic control unit or another computer connected to the electronic control unit to perform the steps according to any one of claims 1-6.

According to an aspect of the invention there is provided a computer programme for controlling an SCR system, wherein said computer programme comprises a programme code stored on a computer readable medium for causing an electronic control unit or another computer connected to the electronic control unit to perform the steps according to any one of claims 1-6.

According to an aspect of the invention there is provided a computer programme pertaining to an SCR system wherein a reducing agent is provided to an exhaust gas stream from an engine for purifying said exhaust gas with respect to a content of NOₓ comprising an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter, wherein said computer programme comprises a programme code for causing an electronic control unit or another computer connected to the electronic control unit to perform the steps according to any one of claims 1-6.

According to an aspect of the invention there is provided a computer programme pertaining to an SCR system, wherein said computer programme comprises a programme code for causing an electronic control unit or another computer connected to the electronic control unit to perform the steps according to any one of claims 1-6.

According to an aspect of the invention there is provided a computer programme for controlling an SCR system, wherein said computer programme comprises a programme code for causing an electronic control unit or another computer connected to the electronic control unit to perform the steps according to any one of claims 1-6.

According to an aspect of the invention there is provided a computer programme product comprising a programme code stored on a computer readable medium for performing the method steps according to any of claims 1-6, when said programme code is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations denote similar items in the various diagrams, and in which:
Figure 1 schematically illustrates a vehicle according to an embodiment of the invention;
Figure 2 schematically illustrates a subsystem for the vehicle depicted in Figure 1, according to an embodiment of the invention;
Figure 3 schematically illustrates a subsystem for the vehicle depicted in Figure 1, according to an embodiment of the invention;
Figure 4a is a schematic flowchart of a method according to an embodiment of the invention;
Figure 4b is a more detailed schematic flowchart of a method according to an embodiment of the invention; and
Figure 5 schematically illustrates a computer according to an embodiment of the invention.

### DETAILED DESCRIPTION OF THE DRAWINGS

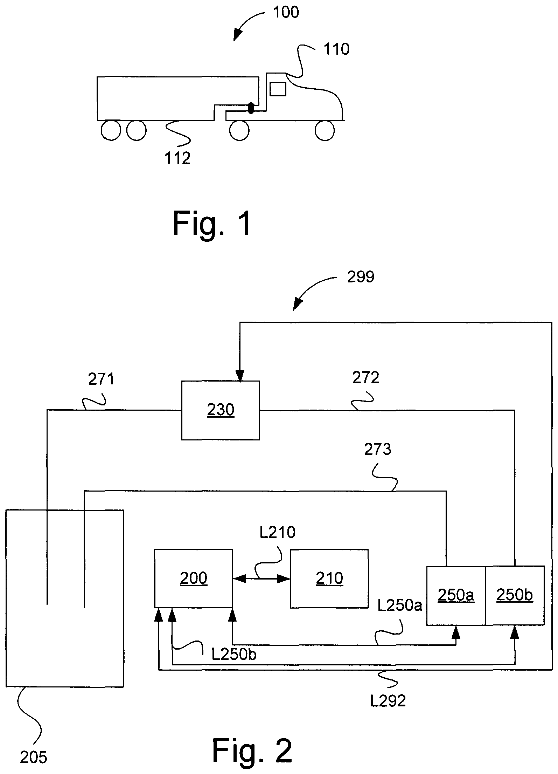

Figure 1 depicts a side view of a vehicle 100. The exemplified vehicle 100 comprises a tractor unit 110 and a trailer 112. The vehicle may be a heavy vehicle, e.g. a truck or a bus. It may alternatively be a car.

It should be noted that the invention is suitable for application in any SCR system and is therefore not confined to SCR systems of motor vehicles. The innovative method and the innovative SCR system in one aspect of the invention are well suited to other platforms which comprise an SCR system than motor vehicles, e.g. watercraft. The watercraft may be of any kind, e.g. motor boats, steamers, ferries or ships.

The innovative method and the innovative SCR system according to one aspect of the invention are also well suited to, for example, systems which comprise industrial engines and/or engine-powered industrial robots.

The innovative method and the innovative SCR system according to one aspect of the invention are also well suited to various kinds of power plants, e.g. an electric power plant which comprises an engine-powered generator.

The innovative method and the innovative SCR system are also well suited to any engine system which comprises an engine and an SCR system, e.g. on a locomotive or some other platform.

The innovative method and the innovative SCR system are also well suited to any system which comprises a NOₓ generator.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any desired size and be made of any suitable material, e.g. plastic, rubber or metal.

The term "reductant" or "reducing agent" refers herein to an agent used for reacting with certain emissions in an SCR system. These emissions may for example comprise NOₓ gas. The terms "reductant" and "reducing agent" are herein used synonymously. In one version, said reductant is so-called AdBlue. Other kinds of reductants may of course be used. AdBlue is herein cited as an example of a reductant, but one skilled in the art will appreciate that the innovative method and the innovative SCR system are feasible with other types of reductants, subject to necessary adaptations in control algorithms for executing programme code in accordance with the innovative method.

Figure 2 depicts a subsystem 299 of the vehicle 100. The subsystem is situated in the tractor unit 110. It may be part of an SCR system. It comprises in this example a container 205 arranged to hold a reductant. The container 205 is adapted to containing a suitable amount of reductant and also to being replenishable as necessary. The container might for example accommodate 75 or 50 litres of reductant.

A first line 271 is adapted to leading the reductant to a pump 230 from the container 205. The pump may be any suitable pump. It may be adapted to being driven by an electric motor. It is adapted to drawing the reductant from the container 205 via the first line 271 and supplying it via a second line 272 to a first dosing unit 250a and a second dosing unit 250b. The first dosing unit 250a and the second dosing unit 250b are arranged in fluid communication with each other. The first dosing unit 250a and the second dosing unit 250b comprise an electrically operated dosing valve by means of which a flow of reductant added to the exhaust system can be controlled. The pump 230 is adapted to pressurising the reductant in the second line 272. Said dosing units are provided with a throttle unit against which said pressure of the reductant is built up in the subsystem 299.

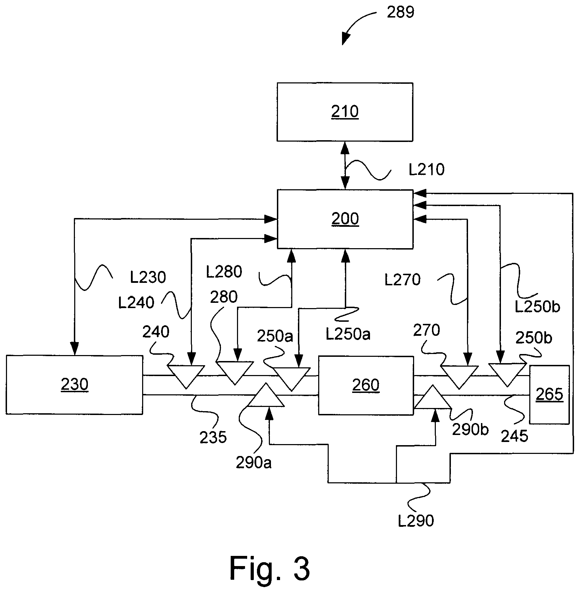

The dosing units 250a and 250b are arranged to supply said reducing agent to an exhaust gas system (see Figure 3) of the vehicle 100. In particular the dosing units 250 are arranged to in a controlled way supply a suitable amount of reducing agent to an exhaust gas system of the vehicle 100. The first dosing unit 250a and the second dosing unit 250b are individually controllable. According to this embodiment an SCR filter 260 (see Figure 3) is arranged downstream of a position of the exhaust gas system where injection of reducing agent is achieved by means of the first dosing unit 250a. According to this embodiment the second dosing unit 250b is arranged downstream of said SCR filter 260 but upstream of an SCR catalyst (not shown).

A third line 273 runs between the first or the second dosing unit 250a and 250b respectively, depending on configuration, and the container 205. The third line 273 is arranged to lead back a certain amount of reducing agent which been feed to one the dosing units 250a and 250b to the container 205. With this configuration there is advantageously achieved cooling of the dosing unit 250a and 250b. In this way the dosing unit 250 is cooled by means of a flow of the reducing agent as this is fed through the dosing units 250a and 250b from the pump 230 to the container 205.

The first control unit 200 is arranged for communication with the pump 230 via a link L292 and is adapted to control the operation of the pump 230 in order to for example regulate flows of reductant within the subsystem 299. The first control unit 200 is adapted to controlling an operating power of the pump 230 by regulating the electric motor associated with said pump.

The first control unit 200 is arranged for communication with the first dosing unit 250a via a link L250a and is adapted to controlling the operation of the first dosing unit 250a in order for example to regulate the supply of reductant to the exhaust gas system of the vehicle 100. The first control unit 200 is adapted to controlling the operation of the first dosing unit 250a in order for example to regulate the supply of reductant back to the container 205.

The first control unit 200 is arranged for communication with the second dosing unit 250b via a link L250b and is adapted to controlling the operation of the second dosing unit 250b in order for example to regulate the supply of reductant to the exhaust gas system of the vehicle 100. The first control unit 200 is adapted to controlling the operation of the second dosing unit 250b in order for example to regulate the supply of reductant back to the container 205.

A second control unit 210 is arranged for communication with the first control unit 200 via a link L210 and may be detachably connected to it. It may be a control unit external to the vehicle 100. It may be adapted to conducting the innovative method steps according to the invention. The second control unit 210 may be arranged to perform the inventive method steps according to the invention. It may be used to cross-load software to the first control unit 200, particularly software for conducting the innovative method. It may alternatively be arranged for communication with the first control unit 200 via an internal network on board the vehicle. It may be adapted to performing substantially the same functions as the first control unit 200, such as, where applicable, controlling dosing of said first and said second dosing unit on the basis of the thus determined differential pressure over said filter. The innovative method may be conducted by the first control unit 200 or the second control unit 210, or by both of them.

Figure 3 schematically illustrates a subsystem 289 of the vehicle 100 shown in Figure 1, according to an embodiment of the invention. The subsystem 289 may comprise a part of the inventive SCR system.

An engine 230 is during operation generating an exhaust gas flow which is lead via a first passage 235 to a with SCR function coated filter 260. Said engine 230 may be a combustion engine. The filter 260 may be a diesel particulate filter. The filter 260 may be coated with a substrate comprising Vanadium. A second passage 245 is arranged to lead exhaust gas from said filter 260 to an SCR catalyst 265, which may comprise a vaporization module and a catalyst portion.

The first control unit 200 is arranged for communication with a combustion engine 230 via a link L230. The first control unit 200 is arranged to control operation of the engine 230 according to stored operational routines.

The first control unit 200 is arranged to control operation of the first dosing unit 250a for injecting reducing agent into the first passage 235.

The first control unit 200 is arranged to control operation of the second dosing unit 250b for injecting reducing agent into the second passage 245.

A first NOₓ sensor 240 is arranged upstream of said filter 260 at said first passage 235. Said first NOₓ sensor 240 is arranged for communication with the first control unit 200 via a link L240. The first NOₓ sensor 240 is arranged to continuously or intermittently determine a prevailing content of NOₓ in the first passage 235. The first NOₓ sensor 240 is arranged to continuously or intermittently send signals comprising information about a prevailing content of NOₓ to the first control unit 200 via the link L240.

The first control unit 200 may according to one embodiment be arranged to by means of a stored model calculate a prevailing content of NOₓ in the first passage 235. The first control unit 200 is arranged to, on the basis of information about for example into said combustion engine 230 injected amount of fuel, calculate a prevailing content of NOₓ in said first passage 235.

A second NOₓ sensor (not shown) may be arranged downstream of said SCR catalyst 265 at a third passage (not shown), which third passage is arranged to lead purified exhaust gas to a surrounding. Said second NOₓ sensor is arranged for communication with the first control unit 200 via a suitable link. The second NOₓ sensor is arranged to continuously or intermittently determine a prevailing content of NOₓ in the third passage. The second NOₓ sensor is arranged to continuously or intermittently send signals comprising information about the prevailing content NOₓ to the first control unit 200 via said link.

A sensor (not shown) for measuring a prevailing exhaust gas mass flow may be arranged in said first passage 235. Said exhaust gas mass flow sensor is arranged to continuously or intermittently determine a prevailing exhaust gas mass flow in the first passage 235 and continuously or intermittently send signals comprising information thereof to the first control unit 200 via a suitable link (not shown).

An ammonia slip catalyst (not shown) may be arranged downstream of said SCR catalyst 265. Said second NOₓ sensor may be arranged downstream of said ammonia slip catalyst. Further, an ammonia sensor (not shown) may be arranged downstream of said SCR catalyst 265, but upstream of with said ammonia slip catalyst. Said ammonia sensor is signal connected to the first control unit 200 via a suitable link (not shown).

Said first NOₓ sensor 240 and said second NOₓ sensor 270 may be used to provide information about prevailing contents of NOₓ in the first passage 235 and said second passage 245, respectively. Hereby the first control unit 200 may be arranged for injecting reducing agent in the first passage 235 in any suitable way on the basis of information thereof.

A first temperature sensor 280 is arranged upstream of said filter 260 at said first passage 235. Said first temperature sensor 280 is arranged for communication with the first control unit 200 via a link L280. The first temperature sensor 280 is arranged to continuously or intermittently determine a prevailing temperature of the exhaust gas in the first passage 235. The temperature sensor 280 is arranged to continuously or intermittently send signals comprising information about a prevailing temperature of the exhaust gas to the first control unit 200 via the link L280.

The first control unit 200 may according to an embodiment be arranged to by means of a stored model calculate a prevailing temperature of the exhaust gas in the first passage 235. The first control unit 200 may be arranged to on the basis of information about for example into said engine 230 injected amount of fuel and exhaust gas mass flow calculate a prevailing temperature of the exhaust gas in the first passage 235.

A second temperature sensor (not shown) is arranged downstream of said filter 260 at said second passage 245. Said second temperature sensor is arranged for communication with the first control unit 200 via a suitable link (not shown). The second temperature sensor is arranged to continuously or intermittently determine a prevailing temperature of the exhaust gas in the second passage 245. The temperature sensor is arranged to continuously or intermittently send signals comprising information about a prevailing temperature of the exhaust gas to the first control unit 200 via said link.

A first pressure sensor 290a is arranged to detect a prevailing pressure P1 in the first passage 235, i.e. upstream of said filter 260. The first pressure sensor 290a is arranged for communication with the first control unit 200 via a link L290. The first pressure sensor 290a is arranged to continuously or intermittently send signals comprising information about said detected pressure P1 to the first control unit 200 via said link L290.

A second pressure sensor 290b is arranged to detect a prevailing pressure P2 in the second passage 245, i.e. downstream of said filter 260. The second pressure sensor 290b is arranged for communication with the first control unit 200 via the link L290. The second pressure sensor 290b is arranged to continuously or intermittently send signals comprising information about said detected pressure P2 to the first control unit 200 via said link L290.

The first control unit 200 may is according to an embodiment arranged to continuously determine a differential pressure P over said filter 260 on the basis of signals received from the first pressure sensor 290a. According to an embodiment the differential pressure over said filter may be determined on the basis of by means of the first pressure sensor 290a measured pressure and a prevailing atmospheric pressure or a predetermined reference pressure.

The first control unit 200 may is according to an embodiment arranged to continuously determine a differential pressure P over said filter 260 on the basis of signals received from the first pressure sensor 290a and the second pressure sensor 290b. According to an embodiment the differential pressure P over the filter 260 is equal a difference between P1 and P2, i.e. P = P1-P2.

The first control unit 200 may be arranged to, where applicable, control dosing of said first and second dosing unit based upon the thus determined differential pressure over said filter.

The first control unit 200 may be arranged to by means of a stored model calculate a prevailing temperature of said filter 260. The first control unit 200 may be arranged to on the basis of information about exhaust gas mass flow and temperature of the exhaust gas in the first passage 235 calculate a prevailing temperature of the filter 260. The first control unit 200 may be arranged to on the basis of information about exhaust gas mass flow and temperature of exhaust gas in the first passage 235 determine if the filter 260 has reached an operational temperature.

According to an embodiment there is provided a temperature sensor (not shown) at said filter 260. Said temperature sensor is arranged for communication with the first control unit 200 via a suitable link (not shown). The temperature sensor is arranged to continuously determine a prevailing temperature of said filter 260. The temperature sensor is arranged to continuously send signals comprising information about the prevailing temperature of said filter 260 to the first control unit 200 via said link.

The first control unit 200 is according to an embodiment arranged to by means of a stored model calculate a prevailing temperature of said SCR catalyst 265. The first control unit 200 is arranged to based upon information about exhaust gas mass flow and temperature of the exhaust gas in the second passage 245 calculate a prevailing temperature of the SCR catalyst 265. The first control unit 200 is arranged to based on the information about exhaust gas mass flow and temperature of the exhaust gas in the second passage 245 determine if the SCR catalyst 265 has reached an operational temperature.

The first control unit 200 is according to an embodiment arranged to by means of a stored model continuously calculate a total need of reducing agent dosing. The first control unit 200 is according to an embodiment arranged to by means of a stored model continuously determine a suitable dosing distribution regarding the first dosing unit 250a and the second dosing unit 250b. The first control unit 200 is according to an embodiment arranged to by means of a stored model continuously control dosing of said first dosing unit 250a and dosing of said second dosing unit 250b according to said determined dosing distribution. Said dosing distribution is a suitable dosing distribution. The first control unit 200 is arranged to continuously determine said suitable dose distribution according to a suitable distribution principle. Said dosing distribution may be defined of a linear function. Said dosing distribution may be defined by a suitable function.

According to an embodiment there is provided a temperature sensor (not shown) at said SCR catalyst 265. Said temperature sensor is arranged for communication with the first control unit 200 via a suitable link (not shown). The temperature sensor is arranged to continuously determine the prevailing temperature of said SCR catalyst 265. The temperature sensor is arranged to continuously send signals comprising information about the prevailing temperature of said SCR catalyst 265 to the first control unit 200 via said link.

According to an example embodiment there is provided an oxidation catalyst (not shown) arranged upstream of said filter 260.

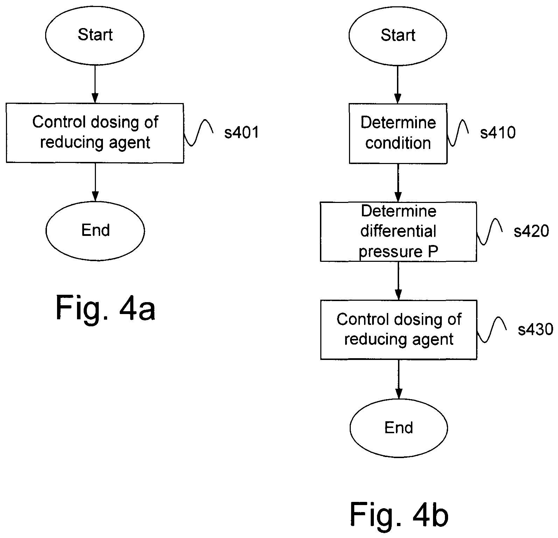

Figure 4a schematically illustrates a flow chart of a method pertaining to an SCR-system, wherein a reducing agent is provided to an exhaust gas stream from an engine for purifying said exhaust gas with respect to among other things content of NOₓ, wherein said SCR system comprises an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter. The method comprises a first method step s401. The step s401 comprises the steps of:
- continuously determining a differential pressure over said filter;
- where applicable, controlling dosing of said first and said dosing unit and said second dosing unit on the basis of the thus determined differential pressure over said filter. After the method step s401 the method ends.

Figure 4b schematically illustrates a flow chart of a method pertaining to an SCR-system, wherein a reducing agent is provided to an exhaust gas stream from an engine for purifying said exhaust gas with respect to among other things content of NOₓ, wherein said SCR system comprises an SCR catalyst and an upstream of said SCR catalyst arranged and for SCR function coated filter, a first dosing unit for provision of reducing agent being arranged upstream of said filter and a second dosing unit for provision of reducing agent being arranged upstream of said SCR catalyst and downstream of said filter, according to an embodiment of the invention.

The method comprises a first method step s410. The method step s410 comprises the step of determining whether a condition corresponding to cold start of the vehicle 100 is prevailing. This may be performed by means of for example the first or second temperature sensor of the SCR system. According to an example the condition cold start is prevailing if temperature in the first or second passage is below 25 degrees Celsius. After the method step s410 there is performed a subsequent method step s420.

The method step s420 comprises the step of continuously determining a differential pressure over said SCR filter 260. This may be performed on the basis of signals provided by the first pressure sensor 290a and the second pressure sensor 290b. After the method step s420 there is performed a subsequent method step s430.

The method step s430 comprises the step of determining a total need of dosing of reducing agent. This dosing need may be determined on the basis of information about for example a prevailing exhaust gas mass flow and/or a prevailing content of NOₓ in the exhaust gas from the engine 230.

The method step s430 comprises the step of, where applicable, controlling said dosing of said first dosing unit 250a and said second dosing unit 250b based on the thus determined differential pressure over said SCR filter 260. The sum of dosed amount reducing agent of said first dosing unit 250a and second dosing unit 250b corresponds hereby to the determined total need of dosing.

A distribution of dosing between the first dosing unit 250a and the second dosing unit 250b may continuously be determined according to in the first control unit 200 stored routines on the basis of a prevailing differential pressure over said filter 260.

At a determined high differential pressure P corresponding high particulate accumulation in the filter, the dosing of said dosing units is controlled to a lesser dosing of said first dosing unit. Hereby the dosing is simultaneously controlled at said dosing units to a corresponding larger dosing of said second dosing unit since the total dosing need of the SCR system should be satisfied.

At a determined low differential pressure P corresponding to low particulate accumulation in the filter 260, the dosing of said dosing units is controlled to a larger dosing of said first dosing unit 250a. Hereby the dosing of said dosing units is simultaneously controlled to a corresponding lower dosing of said second dosing unit since the total dosing need of the SCR system should be satisfied.

A distribution function regarding the first dosing unit 250a and the second dosing unit 250b may be linear paying regard to said determined differential pressure over the filter 260. I.e. if a total dosing need for example is equal Y g/s and that it on the basis of said differential pressure P is determined that the first dosing unit 250a should dose X g/s, the second dosing unit 250b should hereby dose (Y-X)g/s.

According to one embodiment, when a high differential pressure is prevailing, 10% of the total amount reducing agent is dosed by said first dosing unit 250a and 90% of the total amount dosed reducing agent is dosed by said second dosing unit 250b.

According to one embodiment, when a low differential pressure is prevailing, 90% of the total amount reducing agent is dosed by said first dosing unit 250a and 10% of the total amount dosed reducing agent is dosed by said second dosing unit 250b.

According to one embodiment, when a low differential pressure is valid 50% of the total amount reducing agent is dosed by said first dosing unit 250a and 50% of the total amount dosed reducing agent is dosed by said second dosing unit 250b.

After the method step s430 the method is ended.

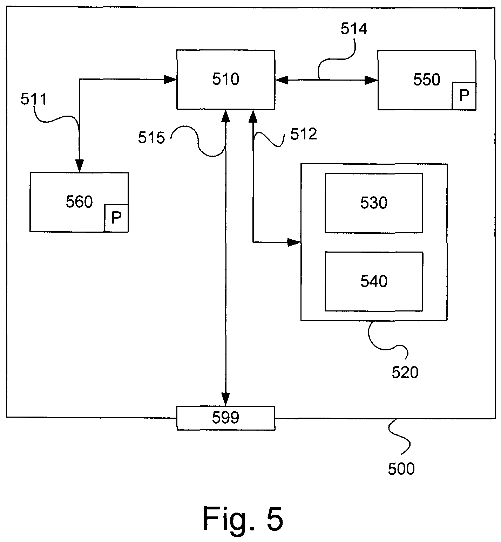

Figure 5 is a diagram of one version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 400 further comprises a bus controller, a serial communication port, I/O means, an A/D converter, a time and date input and transfer unit, an event counter and an interruption controller (not depicted). The non-volatile memory 520 has also a second memory element 540.

The computer programme comprises routines for continuously determining a differential pressure over said filter 260. The computer programme comprises routines for, where applicable, controlling dosing of said first dosing unit 250a and said second dosing unit 250b on the basis of the thus determined differential pressure over said filter 260.

The computer programme comprises routines for determining a content of NOₓ in the exhaust gas upstream of said filter 260 as basis for a total need of reducing agent dosing.

The computer programme comprises routines for at a determined high differential pressure corresponding to a high particulate accumulation in said filter 260, controlling the dosing of said dosing units 250a, 250b to a lesser dosing of said first dosing unit 250a.

The computer programme comprises routines for at a determined low differential pressure corresponding to a low particulate accumulation in said filter 260, controlling the dosing of said dosing units 250a, 250b to a higher dosing of said first dosing unit 250a.

The computer programme comprises routines for activating said controlling based on determined differential pressure when both said filter 260 and said SCR catalyst 265 have reached their respective operational temperature.

The computer programme comprises routines for, at cold start, only performing dosing of reducing agent by means of said first dosing unit 250a independently of said differential pressure P.

The programme P may be stored in an executable form or in compressed form in a memory 560 and/or in a read/write memory 550.

Where it is stated that the data processing unit 510 performs a certain function, it means that it conducts a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit 510 via a data bus 514. The links L210, L240, L250a, L250b, L270, L280, L290 and L292, for example, may be connected to the data port 599 (see Figure 2 and Figure 3).

When data are received on the data port 599, they are stored temporarily in the second memory element 540. When input data received have been temporarily stored, the data processing unit 510 will be prepared to conduct code execution as described above. According to one embodiment signals received on the data port 599 comprises information about a prevailing differential pressure P over the SCR-filter 260. The signals received on the data port 299 may be used by the device 500 for, when applicable, controlling dosing of said first and second dosing unit on the basis of the thus determined differential pressure over said filter.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order to best explain the principles of the invention and their practical applications and thereby make it possible for one skilled in the art to understand the invention for different embodiments and with the various modifications appropriate to the intended use.

## Claims

1. A method pertaining to an SCR system wherein a reducing agent is provided to an exhaust gas stream from an engine (230) for purifying said exhaust gas with respect to a content of NOₓ, wherein said SCR system comprises an SCR catalyst (265) and an upstream of said SCR catalyst (265) arranged and for SCR function coated filter (260), a first dosing unit (250a) for provision of reducing agent being arranged upstream of said filter (260) and a second dosing unit (250b) for provision of reducing agent being arranged upstream of said SCR catalyst (265) and downstream of said filter (260), and comprising , the steps of:
- continuously determining a differential pressure (P) over said filter (260);
- where applicable, controlling dosing of said first and said second dosing unit (250a, 250b) on the basis of the thus determined differential pressure (P) over said filter (260) **characterized by** the steps that
- at a determined high differential pressure (P) corresponding to a high particulate accumulation in said filter, controlling (s410; s430) the dosing of said dosing units (250a, 250b) to a lesser dosing of said first dosing unit (250a)
- at a determined low differential pressure (P) corresponding to a low particulate accumulation in said filter (260), controlling the dosing of said dosing units (250a, 250b) to a higher dosing of said first dosing unit (250a).

2. A method according to claim 1, further comprising the step of:
- determining a content of NOₓ in the exhaust gas as basis for a total need of reducing agent dosing.

3. A method according to any one of the foregoing claims, wherein said controlling based on determined differential pressure (P) is activated when both said filter (260) and said SCR catalyst (265) have reached their respective operational temperature.

4. A method according to any one of the foregoing claims, wherein, at cold start, the dosing of reducing agent only is performed by means of said first dosing unit (250a) independently of said differential pressure (P).

5. An SCR system wherein a reducing agent is provided to an exhaust gas stream from an engine (230) for purifying said exhaust gas with respect to a content of NOₓ, wherein said SCR system comprises an SCR catalyst (265) and an upstream of said SCR catalyst (265) arranged and for SCR function coated filter (260), a first dosing unit (250a) for provision of reducing agent being arranged upstream of said filter (260) and a second dosing unit (250b) for provision of reducing agent being arranged upstream of said SCR catalyst (265) and downstream of said filter (260),
- means (290a; 290b; 200) for continuously determining a differential pressure (P) over said filter (260);
- means (200; 210; 500; 250a; 250b) for, when applicable, controlling said dosing of said first and said second dosing unit (250a, 250b) on the basis of the thus determined differential pressure (P) over said filter (260) **characterized by**
- means (200; 210; 500; 250a; 250b) for, at a determined high differential pressure (P) corresponding to a high particulate accumulation in said filter (260), controlling said dosing of said dosing units (250a; 250b) to a lesser dosing of said first dosing unit (250a)
- means (200; 210; 500; 250a; 250b) for, at a determined low differential pressure (P) corresponding to a low particulate accumulation in said filter (260), controlling dosing of said dosing units (250a; 250b) to a higher dosing of said first dosing unit (250a).

6. An SCR system according to claim 5, further comprising:
- means (240; 200; 210; 500) for determining an exhaust gas flow and content of NOₓ in said exhaust gas as basis for a total need of reducing agent dosing.

7. An SCR system according to any of claims 5-6, comprising:
- means (280; 200; 210; 500) for determining a prevailing temperature of said filter (260);
- means (280; 200; 210; 500) for determining a prevailing temperature of said SCR catalyst (265);
- means (200; 210; 500) for activating said controlling based on an established differential pressure (P) when both said filter (260) and said SCR catalyst (265) have reached their respective operational temperature.

8. An SCR system according to any of claims 5-7, wherein, at cold start, the dosing of reducing agent only is performed by means of said first dosing unit (250a) independently of said differential pressure (P).

9. Motor vehicle (100; 110) comprising an SCR system according to any of claims 5-8.

10. Motor vehicle (100; 110) according to claim 9, wherein said motor vehicle is any of a truck, bus or car.

11. A computer programme (P) pertaining to an SCR system wherein a reducing agent is provided to an exhaust gas stream from an engine (230) for purifying said exhaust gas with respect to a content of NOₓ comprising an SCR catalyst (265) and an upstream of said SCR catalyst (265) arranged and for SCR function coated filter (260), a first dosing unit (250a) arranged upstream of said filter (260) and a second dosing unit (250b) arranged upstream of said SCR catalyst (265), wherein said computer programme (P) comprises a programme code for causing an electronic control unit (200; 500) or another computer (210; 500) connected to the electronic control unit (200; 500) to perform the steps according to any one of claims 1-4.

12. A computer programme product comprising a programme code stored on a computer readable medium for performing method steps according to any of claims 1-4, when said programme code is run on an electronic control unit (210; 500) or another computer (210; 500) connected to the electronic control unit (200; 500).

## Patentansprüche

1. Verfahren für ein SCR-System, in dem ein Reduktionsmittel für einen Abgasstrom von einem Verbrennungsmotor (230) zur Reinigung des Abgases bezüglich des NOₓ-Anteils bereitgestellt wird, wobei das SCR-System einen SCR-Katalysator (265) und einen stromaufwärts des SCR-Katalysators (265) angeordneten und für die SCR-Funktion beschichteten Filter (260) aufweist, eine erste Dosiereinheit (250a) zur Bereitstellung des Reduktionsmittels, die stromaufwärts des Filters (260) angeordnet ist, und eine zweite Dosiereinheit (250b) zur Bereitstellung des Reduktionsmittels, die stromaufwärts des SCR-Katalysators (265) und stromabwärts des Filters (260) angeordnet ist,
und das die Schritte aufweist:
- kontinuierliches Bestimmen des Differenzdrucks (P) über dem Filter (260);
- wenn zutreffend, Regeln der Dosierung der ersten und zweiten Dosiereinheit (250a, 250b) auf Basis des bestimmten Differenzdrucks (P) über dem Filter (260), **gekennzeichnet durch** die Schritte, dass
- bei einem bestimmten hohen Differenzdruck (P), entsprechend einer hohen Partikelablagerung im Filter, Regeln (s410; s430) der Dosierung der Dosiereinheiten (250a, 250b) auf eine geringere Dosierung durch die erste Dosiereinheit (250a);
- bei einem bestimmten niedrigen Differenzdruck (P), entsprechend einer geringen Partikelablagerung, im Filter (260) Regeln der Dosierung der Dosiereinheiten (250a, 250b) auf eine höhere Dosierung durch die erste Dosiereinheit (250a).

2. Verfahren nach Anspruch 1, das ferner den Schritt aufweist:
- Bestimmen des NOₓ-Anteils im Abgas als Basis für den Gesamtbedarf zur Dosierung des Reduktionsmittels.

3. Verfahren nach einem der vorigen Ansprüche, wobei die Regelung auf Basis des bestimmten Differenzdrucks (P) aktiviert wird, wenn der Filter (260) und der SCR-Katalysator (265) ihre jeweilige Betriebstemperatur erreicht haben.

4. Verfahren nach einem der vorigen Ansprüche, wobei bei einem Kaltstart die Dosierung des Reduktionsmittels nur durch die erste Dosiereinheit (250a) unabhängig vom Differenzdruck erfolgt.

5. SCR-System, in dem ein Reduktionsmittel für einen Abgasstrom von einem Verbrennungsmotor (230) zur Reinigung des Abgases bezüglich des NOₓ-Anteils bereitgestellt wird, wobei das SCR-System einen SCR-Katalysator (265) und einen stromaufwärts des SCR-Katalysators (265) angeordneten und zur SCR-Funktion beschichteten Filter (260) aufweist, eine erste Dosiereinheit (250a) zur Bereitstellung des Reduktionsmittels, die stromaufwärts des Filters (260) angeordnet ist, und eine zweite Dosiereinheit (250b) zur Bereitstellung des Reduktionsmittels, die stromaufwärts des SCR-Katalysators (265) und stromabwärts des Filters (260) angeordnet ist,
- Mittel (290a; 290b; 200) zum kontinuierlichen Bestimmen des Differenzdrucks (P) über dem Filter (260).
- Mittel (200; 210; 500; 250a, 250b) zum Regeln der Dosierung der ersten und zweiten Dosiereinheit (250a, 250b) auf Basis des bestimmten Differenzdrucks (P) über dem Filter (260), wenn zutreffend,
**gekennzeichnet durch**
- Mittel (200; 210; 500; 250a, 250b), um bei einem bestimmten hohen Differenzdruck (P), entsprechend einer hohen Partikelablagerung im Filter (260), die Dosierung der Dosiereinheiten (250a, 250b) auf eine höhere Dosierung durch die erste Dosiereinheit (250a) zu regeln;
- Mittel (200; 210; 500; 250a, 250b), um bei einem bestimmten niedrigen Differenzdruck (P), entsprechend einer geringen Partikelablagerung im Filter (260), die Dosierung der Dosiereinheiten (250a, 250b) auf eine höhere Dosierung durch die erste Dosiereinheit 250a) zu regeln.

6. SCR-System nach Anspruch 5, ferner aufweisend:
- Mittel (240; 200; 210; 500) zum Bestimmen eines Abgasstroms und des NOₓ-Anteils im Abgas als Basis für den Gesamtbedarf zur Dosierung des Reduktionsmittels.

7. SCR-System nach einem der Ansprüche 5 bis 6, aufweisend:
- Mittel (280; 200; 210; 500) zur Bestimmung einer herrschenden Temperatur des Filters (260);
- Mittel (280; 200; 210; 500) zur Bestimmung einer herrschenden Temperatur des SCR-Katalysators (265);
- Mittel (200; 210; 500) zum Aktivieren der Regelung auf Basis eines festgelegten Differenzdrucks (P), wenn sowohl das Filter (260) als auch der SCR-Katalysator (265) ihre jeweilige Betriebstemperatur erreicht haben.

8. SCR-System nach einem der Ansprüche 5 bis 7, wobei bei einem Kaltstart die Dosierung des Reduktionsmittels nur durch die erste Dosiereinheit (250a) unabhängig vom Differenzdruck (P) erfolgt.

9. Kraftfahrzeug (100; 110), das ein SCR-System nach einem der Ansprüche 5 bis 8 aufweist.

10. Kraftfahrzeug (100; 110) nach Anspruch 9, wobei das Kraftfahrzeug entweder ein Lastkraftwagen, ein Bus oder ein Personenkraftwagen ist.

11. Computerprogramm (P) für ein SCR-System, in dem ein Reduktionsmittel für einen Abgasstrom von einem Verbrennungsmotor (230) zur Reinigung des Abgases bezüglich des NOₓ-Anteils bereitgestellt wird, das einen SCR-Katalysator (265) und einen stromaufwärts des SCR-Katalysators (265) angeordneten und zur SCR-Funktion beschichteten Filter (260) aufweist, eine erste Dosiereinheit (250a), die stromaufwärts des Filters (260) angeordnet ist, und eine zweite Dosiereinheit (250b), die stromaufwärts des SCR-Katalysators (265) angeordnet ist, wobei das Computerprogramm (P) einen Programmcode aufweist, der eine elektronische Steuereinheit (200; 500) oder einem anderen mit der elektronischen Steuereinheit (200; 500) verbundenen Computer (210; 500) veranlasst, die Schritte nach einem der Ansprüche 1 bis 4 auszuführen.

12. Computerprogrammprodukt mit einem Programmcode, der zur Ausführung der Schritte nach einem der Ansprüche 1 bis 4 auf einem computerlesbaren Medium gespeichert ist, wenn der Programmcode auf einer elektronischen Steuereinheit (200; 500) oder einem anderen mit der elektronischen Steuereinheit (200; 500) verbundenen Computer (210; 500) ausgeführt wird.

## Revendications

1. Procédé relatif à un système SCR dans lequel un agent réducteur est délivré dans une circulation de gaz d'échappement provenant d'un moteur (230) pour purifier lesdits gaz d'échappement quant à une teneur en NOₓ, dans lequel ledit système SCR comprend un catalyseur SCR (265) et un filtre (260) traité pour une fonctionnalité SCR et disposé en amont dudit catalyseur SCR (265), une première unité de dosage (250a) adaptée à délivrer l'agent réducteur étant disposée en amont dudit filtre (260) et une seconde unité de dosage (250b) adaptée à délivrer l'agent réducteur étant disposée en amont dudit catalyseur SCR (265) et en aval dudit filtre (260),
et comprenant les étapes consistant à :
- déterminer en continu une pression différentielle (P) sur ledit filtre (260) ;
- lorsqu'applicable, commander le dosage de ladite première et de ladite seconde unité de dosage (250a, 250b) sur la base de la pression différentielle (P) sur ledit filtre (260) ainsi déterminée, **caractérisé par** les étapes consistant à
- à une pression différentielle (P) élevée déterminée, correspondant à une accumulation élevée de particules dans ledit filtre, commander (s410 ; s430) le dosage desdites unités de dosage (250a, 250b) pour diminuer le dosage de ladite première unité de dosage (250a)
- à une pression différentielle (P) faible déterminée, correspondant à une faible accumulation de particules dans ledit filtre (260), commander le dosage desdites unités de dosage (250a, 250b) pour augmenter le dosage de ladite première unité de dosage (250a).

2. Procédé selon la revendication 1, comprenant en outre l'étape consistant à :
- déterminer une teneur en NOₓ dans les gaz d'échappement comme base pour doser le besoin total d'agent réducteur.

3. Procédé selon l'une quelconque des revendications précédentes, dans lequel ladite commande basée sur la pression différentielle (P) déterminée est activée lorsque ledit filtre (260) et ledit catalyseur SCR (265) ont tous deux atteint leur température opérationnelle respective.

4. Procédé selon l'une quelconque des revendications précédentes, dans lequel, lors d'un démarrage à froid, seul le dosage de l'agent réducteur est effectué au moyen de ladite première unité de dosage (250a), indépendamment de ladite pression différentielle (P).

5. Système SCR dans lequel un agent réducteur est délivré dans une circulation de gaz d'échappement provenant d'un moteur (230) pour purifier lesdits gaz d'échappement quant à une teneur en NOₓ, dans lequel ledit système SCR comprend un catalyseur SCR (265) et un filtre (260) traité pour une fonctionnalité SCR et disposé en amont dudit catalyseur SCR (265), une première unité de dosage (250a) adaptée à délivrer l'agent réducteur étant disposée en amont dudit filtre (260) et une seconde unité de dosage (250b) adaptée à délivrer l'agent réducteur étant disposée en amont dudit catalyseur SCR (265) et en aval dudit filtre (260),
- des moyens (290a ; 290b ; 200) pour déterminer en continu une pression différentielle (P) sur ledit filtre (260) ;
- des moyens (200 ; 210 ; 500 ; 250a ; 250b) pour commander, lorsqu'applicable, ledit dosage de ladite première et de ladite seconde unité de dosage (250a, 250b) sur la base de la pression différentielle (P) sur ledit filtre (260) ainsi déterminée
**caractérisé par**
- des moyens (200 ; 210 ; 500 ; 250a ; 250b) pour, à une pression différentielle (P) élevée déterminée, correspondant à une accumulation élevée de particules dans ledit filtre (260), commander ledit dosage desdites unités de dosage (250a ; 250b) pour diminuer le dosage de ladite première unité de dosage (250a)
- des moyens (200 ; 210 ; 500 ; 250a ; 250b) pour, à une pression différentielle (P) faible déterminée, correspondant à une faible accumulation de particules dans ledit filtre (260), commander le dosage desdites unités de dosage (250a ; 250b) pour augmenter le dosage de ladite première unité de dosage (250a).

6. Système SCR selon la revendication 5, comprenant en outre :
- des moyens (240 ; 200 ; 210 ; 500) pour déterminer un flux de gaz d'échappement et la teneur en NOₓ dans lesdits gaz d'échappement comme base pour doser le besoin total d'agent réducteur.

7. Système SCR selon l'une quelconque des revendications 5 et 6, comprenant :
- des moyens (280 ; 200 ; 210 ; 500) pour déterminer une température momentanée dudit filtre (260) ;
- des moyens (280 ; 200 ; 210 ; 500) pour déterminer une température momentanée dudit catalyseur SCR (265) ;
- des moyens (200 ; 210 ; 500) pour activer ladite commande sur la base d'une pression différentielle (P) établie lorsque ledit filtre (260) et ledit catalyseur SCR (265) ont tous deux atteint leur température opérationnelle respective.

8. Système SCR selon l'une quelconque des revendications 5 à 7, dans lequel, lors d'un démarrage à froid, seul le dosage de l'agent réducteur est effectué au moyen de ladite première unité de dosage (250a) indépendamment de ladite pression différentielle (P).

9. Véhicule à moteur (100; 110) comprenant un système SCR selon l'un quelconque des revendications 5 à 8.

10. Véhicule à moteur (100 ; 110) selon la revendication 9, dans lequel ledit véhicule à moteur est l'un quelconque parmi un camion, un bus ou une voiture.

11. Programme informatique (P) relatif à un système SCR dans lequel un agent réducteur est délivré dans une circulation de gaz d'échappement provenant d'un moteur (230) pour purifier lesdits gaz d'échappement quant à une teneur en NOx, comprenant un catalyseur SCR (265) et un filtre (260) traité pour une fonctionnalité SCR et disposé en amont dudit catalyseur SCR (265), une première unité de dosage (250a) disposée en amont dudit filtre (260) et une seconde unité de dosage (250b) disposée en amont dudit catalyseur SCR (265), dans lequel ledit programme informatique (P) comprend un code de programme pour amener une unité de commande électronique (200 ; 500) ou un autre ordinateur (210 ; 500) connecté à l'unité de commande électronique (200 ; 500) à effectuer les étapes selon l'une quelconque des revendications 1 à 4.

12. Produit de programme informatique comprenant un code de programme mémorisé sur un support lisible par ordinateur pour effectuer les étapes de procédé selon l'une quelconque des revendications 1 à 4, lorsque ledit code de programme est exécuté sur une unité de commande électronique (210 ; 500) ou un autre ordinateur (210 ; 500) connecté à l'unité de commande électronique (200 ; 500).
